# EUROPÄISCHE PATENTSCHRIFT

(11) **EP 2 037 375 B1**
(45) Veröffentlichungstag und Bekanntmachung des Hinweises auf die Patenterteilung: **13.03.2019**
(21) Anmeldenummer: 07017800.9
(22) Anmeldetag: 11.09.2007
(51) Int. Cl.: G06F 17/30

(54) **Verfahren zum Betreiben von Datenbanken**
Method for operating databases
Procédé de fonctionnement de bases de données

(43) Veröffentlichungstag der Anmeldung: 18.03.2009
(73) Patentinhaber: Unify GmbH & Co. KG, 80807 München (DE)
(72) Erfinder: Tietsch, Michael, 86916 Kaufering (DE)
(74) Vertreter: Fritzsche, Thomas

(56) Entgegenhaltungen:
- US-A- 6 058 391
- US-A- 6 070 165
- US-B1- 6 711 593

## Beschreibung

Die Erfindung betrifft ein Verfahren zum Betreiben von Datenbanken nach dem Oberbegriff des Anspruchs 1.

Die Verwendung von Datenbanken zum Vorhalten von strukturiert gespeicherten Daten ist hinlänglich bekannt. Der Zugriff auf Inhalte dieser Datenbanken, also auf die gespeicherten Daten, erfolgt dabei in der Regel entweder um sich den Inhalt lediglich anzeigen zu lassen oder aber auch um den Inhalt zu editieren. In der Regel sind diese vorgehaltenen Daten editierbar.

Neben diesen Zugriffen zum Editieren oder auch nur Betrachten bestehender DB-Einträge kommt es auch zum Einfügen neuer Elemente, wobei hier ggf. bestehende Einträge als Vorlage genommen, d.h. zunächst kopiert werden.

Dabei wird dieser Vorgang zudem durch fehlende Übersicht beim Hantieren von aus mehreren Tabellen kopierte Einträge (als Basis für Neueinträge) erschwert, da diese Einträge auch dann erhalten bleiben, wenn gar keine Änderung vorgenommen wurde, wodurch das Prinzip der Redundanz-Freiheit zerstört wird.

Ein weiterer Nachteil solcher Datenbanken liegt darin, dass aufgrund der Tatsache, dass diese Daten in der Regel aus vielen verschiedenen Tabellen stammen, das Editieren der Daten sehr aufwändig und fehleranfällig ist.

Bei relationalen Datenbanken mit komplexen Strukturen potenziert sich dieser Nachteil, da es dort immer wieder notwendig ist, ganze Baumstrukturen zu editieren.

Die US 6,711,593 B1 offenbart ein Verfahren für eine live-Aktualisierung einer Fertigungsanlage.

Die der Erfindung zugrunde liegende Aufgabe besteht darin ein Verfahren und eine Anordnung anzugeben, die ein verbessertes Editieren von Datenbanken ermöglichen.

Diese Aufgabe wird ausgehend von dem Oberbegriff des Anspruchs 1 durch dessen kennzeichnende Merkmale gelöst.

Das erfindungsgemäße Verfahren zum Betreiben von Datenbanken mit einer Vielzahl von ersten Daten zeichnet sich dadurch aus, dass
a) für einen Editiervorgang zumindest eines Teils von in logischer Beziehung zueinander stehender Teile der Vielzahl von ersten Daten als zweite Daten eine temporäre Kopie erstellt wird,
b) die zweiten Daten von einem Benutzer derart dargeboten wird, dass er die zweiten Daten editieren kann,
c) mit Abschluss des Editiervorgangs ein Einzelvergleich der zweiten Daten mit den ersten Daten derart erfolgt, dass
   c1) bei Übereinstimmung eines zweiten Datums der zweiten Daten mit einem ersten Datum der ersten Daten, in der Datenbank ein Verweis auf das dem zweiten Datum entsprechende erste Datum angelegt wird,
   c2) zumindest'Teile der zweiten Daten, für die keine Übereinstimmung mit ersten Daten ermittelt wird, in der Datenbank gespeichert werden.

Hierdurch werden Redundanzen vermieden, da lediglich editierte Teile eines Datenbankabzugs überhaupt für eine Ablage in der Datenbank in Frage kommen. Insbesondere verstärkt sich dieser Vorteil bei der Erzeugung neuer Einträge durch Kopieren von Teilen des Datenbankbestandes als Vorlage. Ferner ermöglicht die erfindungsgemäße Verfahrensweise ein Arbeiten mit Daten der Datenbank ohne genaue Kenntnis über die Struktur der Datenbank zu haben, da ja die notwendigen Daten aus - verschiedenen Teilen - der Datenbank entnommen werden können und dem Benutzer als diese Teile gemeinsam enthaltende Kopie zur Bearbeitung dargestellt wird.

Indem die Speicherung abhängig von einer zumindest einem Teil der ersten Daten zugeordneten die Daten charakterisierenden Information erfolgt, bieten sich noch zusätzliche Freiheitsgrade zur Beeinflussung des Speichervorgangs, die sich insbesondere darin ergeben, dass aufgrund der Information Fallentscheidungen getroffen werden, welche insbesondere beim Automatisieren des Vorgangs und damit weiteren Entlastung des Benutzers dienlich sind, wobei das Automatisieren wiederum die Fehlerwahrscheinlichkeit durch Benutzereingaben reduziert.

Die charakterisierende Information ist derart als ein Attribut ausgestaltet, dass es eine als Wert festlegbare Signifikanz des jeweiligen Datums angibt. Hierdurch lässt sich für jedes Datum die Bedeutung einer Änderung respektive des Datums angeben.

Wird im Falle, dass der Einzelvergleich von einem ersten einen niedrigen Signifikanzwert aufweisendem Datum der ersten Daten mit einem zweiten Datum erfolgt und keine Übereinstimmung vorliegt eine Benutzerabfrage derart durchgeführt, dass die Speicherung abhängig von einer Eingabe der Abfrage folgenden Eingabe des Benutzers erfolgt und im Falle, dass der Einzelvergleich von dem ersten einen hohen Signifikanzwert aufweisendem Datum der ersten Daten mit dem zweiten Datum erfolgt, eine Speicherung in der Datenbank eine Benutzerabfrage unterbleibt, so kann eine beispielsweise feingranulare Abstimmung der zu speichernden Inhalte angeboten werden und zum Beispiel eine niedrige Signifikanz aufweisende Daten, wie sie beispielsweise in Kommentarfeldern zu finden sind, dem Benutzer für eine Überarbeitung angeboten werden.

Erfolgt die Speicherung derart, dass das jeweilige erste Datum in einem der Datenbank zugeordneten Speicher durch das zweite Datum überschrieben wird, können vorhandene Daten in der Datenbank mit neuen Inhalten aktualisiert werden, während wenn die Speicherung derart erfolgt, dass das jeweilige zweite Datum als ein neues erstes Datum in einem der Datenbank zugeordneten Speicher geschrieben wird, eine Möglichkeit geschaffen wird, insbesondere auf Grundlage von bereits vorhandenen als Vorlage genutzten Daten, neue Daten zu generieren. Vorzugsweise erfolgt der Einzelvergleich ausgelöst durch eine Benutzereingabe, insbesondere dem Initiieren des Speicherns der zweiten Daten, da zu diesem Zeitpunkt der Editiervorgang als abgeschlossen anzunehmen ist bzw. der Wunsch des Benutzers, die Daten zu sichern, mit dem Auslösen des Speichervorgangs korreliert.

Wird der Umfang des Teils der in logischer Beziehung zueinander stehender Daten auf Grundlage einer Benutzereingabe gebildet, so kann der Benutzer die so genannte Wurzel, den Umfang und/oder die Zusammensetzung des Datenbankabzugs bestimmen, so dass die Flexibilität in der Bearbeitung erhöht wird.

Vorzugsweise handelt es sich um eine relationelle Datenbank.

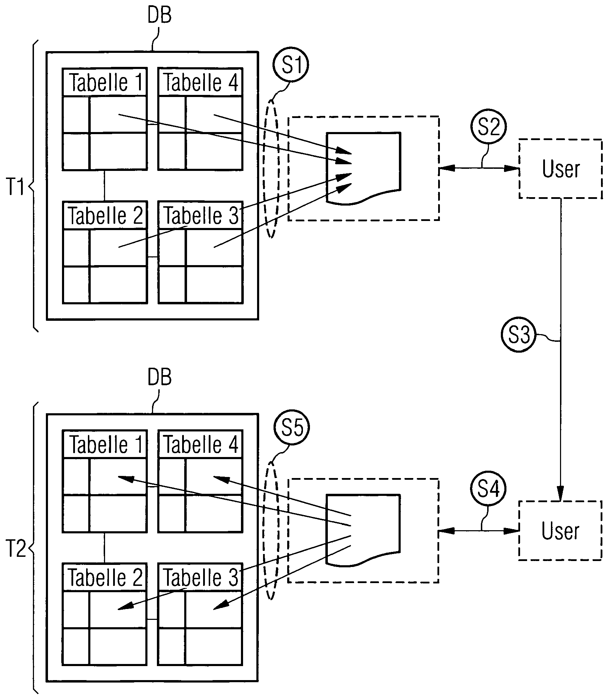

Weitere Vorteile und Einzelheiten der Erfindung werden ausgehend von einem in der einzigen Figur dargestellten Ausführungsbeispiel näher erläutert. Dabei zeigt die
- Figur: eine schematische Darstellung eines Ausführungsbeispiels des erfindungsgemäßen Verfahrens.

Zu erkennen ist in der Figur dabei eine Datenbank DB, welche beispielsweise eine relationale Datenbank sein kann zu einem ersten Zeitpunkt T1, zu dem das erfindungsgemäße Verfahren noch nicht zum Einsatz gekommen ist.

Ferner ist die Datenbank DB zu einem zweiten Zeitpunkt T2 dargestellt, nachdem die erfindungsgemäßen Schritte angewandt wurden.

Schematisch ist dabei jeweils der Inhalt der Datenbank DB als Relationen aufweisende Tabellen 1 bis 4 dargestellt.

Will nun ein Nutzer (User) Elemente der Datenbank DB editieren, beispielsweise im Rahmen eines diese Elemente beherbergenden Dokumentes, werden in einem ersten Schritt S1 diese Elemente aus den jeweiligen Tabellen der Datenbank DB in eine lokale temporäre Kopie zusammenkopiert, die dem Benutzer zur Bearbeitung präsentiert, d.h. an einem Bildschirm bzw. Ausgabegerät angezeigt.

In einem zweiten Schritt S2 editiert nun der Benutzer (User) an diesem temporären virtuellen Dokument, so dass er nach Abschluss seines Editierens in einem dritten Schritt S3 eine Speicherung des Dokumentes auslöst, was in einem vierten Schritt S4 eine gemäß der Erfindung durchzuführende Datenintegration veranlasst.

Diese Datenintegration besteht darin, dass temporäre Daten mit denen in der Datenbank DB verglichen werden, wobei bei einer Weiterbildung ebenfalls Signifikanzattribute berücksichtigt werden können. Im Einzelnen wird dabei geprüft, ob es Unterschiede zwischen den Daten gibt. Ist dies der Fall, wird die temporäre Kopie verworfen und in der relationalen Datenbank wird ein Verweislink auf das Originaldatum (Element) gesetzt.

Ferner wird in dem Fall, dass der Vergleich ergibt, dass Daten mit hoher Signifikanz gleich sind und Unterschiede nur in Feldern der Tabellen mit niedriger Signifikanz bestehen, eine Ausgabe an den Benutzer erzeugt, die dem Benutzer die Entscheidung anbietet, ob seine Änderung nun in die Datenbank DB aufgenommen werden soll oder ob sie verworfen werden soll und stattdessen ein Link auf dem originalen Element gesetzt wird.

Als ein dritter Teilschritt erfolgt bei der Überprüfung im Falle, dass Daten mit hoher Signifikanz unterschiedlich sind, eine Änderung dahingehend, dass die virtuellen Daten ohne Rückfrage in der Datenbank DB aufgenommen werden.

Eine nicht dargestellte Alternative bzw. Ergänzung besteht darin, dass der Benutzer auch das bereits in der Datenbank DB gespeicherte mit niedriger Signifikanz gekennzeichnete Feld, wie beispielsweise ein für ein Kommentar vorgesehenes Feld, so abändert, beispielsweise generalisiert, dass es sowohl dem ursprünglichen, als auch dem neuen Zweck entspricht. Somit werden erfindungsgemäß die drei Fälle
a) neuen Text verwerfen, (bereits gespeicherter gilt weiterhin unverändert)
b) neuen Text speichern (additiv zum bereits gespeicherten) und
c) bereits gespeicherten Text modifizieren, wobei dies zwar Rückwirkung auf einen bestehenden Eintrag hat aber bei sinnvollem Einsatz erfindungsgemäß unnötige Redundanz verhindert,
abgedeckt.

Im Kern wird mit dem erfindungsgemäßen Verfahren somit eine neue Funktion in der Bearbeitung von Datenbanken realisiert, die man mit "Derive And Re-integrate" (DAR)-Funktion bezeichnen könnte.

Diese Funktion zeichnet sich erfindungsgemäß dadurch aus, dass sie einen kompletten zu bearbeitenden Baum, welcher ausgehend von einer beispielsweise vom Anwender gewählten "Wurzel" temporär kopiert, also abgeleitet wird (Derive).

Dieser auch als Datenbankabzug bezeichneter ausgewählter Auszug des Inhalts kann dabei dann sich vorteilhaft aus der Erfindung ergebend wie ein einfaches Text-Dokument bzw. als Formular dargestellt werden, so dass der Anwender an den notwendigen Stellen Änderungen oder Erweiterungen vornehmen und sobald er fertig ist, das Dokument auf die übliche Art speichern kann.

Mit der Auswahl der Speicheroption wird dann gemäß der sich durch die Erfindung ergebenden Funktion dann hierdurch die abschließende Re-Integration der Daten gestartet und die kopierten und ggf. modifizierten Datenbankeinträge mit den Originalen verglichen. Als weiterer Kern der Erfindung ergibt sich damit als Ergebnis dieser Vergleichsvorgänge (pro DB-Entity):

Im Falle, dass keine Änderung eines Datums (Element) erfolgt ist, ein Anlegen eines Links auf das Original des Datums, die Kopie wird gelöscht.

Im Falle einer Änderung die editierte Kopie des Datums beibehalten.

Als ergänzende Weiterbildung des erfindungsgemäßen Verfahrens kann diese neue Funktion dadurch bereichern, dass man den Datenfeldern noch ein Attribut zuordnet, welches die Aussage zur Signifikanz des jeweiligen Datums macht und bei der Re-Integration ausgewertet wird.

So ist denkbar, dass ein Feld die Eigenschaft hat, dass es zur Re-Integration 100% mit dem in dem in der Datenbank DB vorhandenen Eintrag übereinstimmen muss, wie beispielsweise ein Feld mit einer technischen Eigenschaft. Ferner ist denkbar, dass andere Felder, wie beispielsweise Kommentare zur Überarbeitung angeboten werden, falls sich zwei Datensätze nur hierin unterscheiden.

Die Erfindung bietet also sowohl Vorteile für den Anwender, wie beispielsweise, dass die Eigenschaften der Datenbank DB, wie Tabellen, Verlinkungen verborgen bleiben (können) und der Bearbeiter die Daten gewissermaßen "flach" bearbeiten, d.h. ohne sich um die darunter liegenden Strukturen kümmern zu müssen, als auch Vorteile für Datenbank DB, d.h. für ihre Struktur, denn Redundanzen werden vermieden, so dass Inkonsistenzen zwischen "fast gleichen" Einträgen vermieden werden.

## Patentansprüche

1. Verfahren zum Betreiben von Datenbanken (DB) mit einer Vielzahl von ersten Daten, **dadurch gekennzeichnet, dass**
a) für einen Editiervorgang zumindest eines Teils von in logischer Beziehung zueinander stehender Teile der Vielzahl von ersten Daten als zweite Daten eine temporäre Kopie erstellt wird (S1),
b) die zweiten Daten von einem Benutzer derart dargeboten wird, dass er die zweiten Daten editieren kann (S2),
c) mit Abschluss des Editiervorgangs ein Einzelvergleich der zweiten Daten mit den ersten Daten derart erfolgt, dass
c1) bei Übereinstimmung eines zweiten Datums der zweiten Daten mit einem ersten Datum der ersten Daten, in der Datenbank ein Verweis auf das dem zweiten Datum entsprechende erste Datum angelegt wird,
c2) zumindest Teile der zweiten Daten für die keine Übereinstimmung mit ersten Daten ermittelt wird, in der Datenbank gespeichert werden, wobei die Speicherung abhängig von einer zumindest einem Teil der ersten Daten zugeordneten die Daten charakterisierenden Information erfolgt, sowie die charakterisierende Information derart als ein Attribut ausgestaltet ist, dass es eine als Wert festlegbare Signifikanz des jeweiligen Datums angibt.

2. Verfahren nach dem vorhergehenden Anspruch, **dadurch gekennzeichnet, dass**
a) im Falle, dass der Einzelvergleich von einem ersten einen niedrigen Signifikanzwert aufweisendem Datum der ersten Daten mit einem zweiten Datum erfolgt und keine Übereinstimmung vorliegt, eine Benutzerabfrage derart durchgeführt, dass die Speicherung abhängig von einer Eingabe der Abfrage folgenden Eingabe des Benutzers erfolgt,
b) im Falle, dass der Einzelvergleich von dem ersten einen hohen Signifikanzwert aufweisendem Datum der ersten Daten mit dem zweiten Datum erfolgt, eine Speicherung in der Datenbank eine Benutzerabfrage unterbleibt.

3. Verfahren nach einem der vorhergehenden Ansprüche, dass die Speicherung derart erfolgt, dass das jeweilige erste Datum in einem der Datenbank zugeordneten Speicher durch das zweite Datum überschrieben wird.

4. Verfahren nach einem der vorhergehenden Ansprüche, dass die Speicherung derart erfolgt, dass das jeweilige zweite Datum als ein neues erstes Datum in einem der Datenbank zugeordneten Speicher geschrieben wird.

5. Verfahren nach einem der vorhergehenden Ansprüche, **dadurch gekennzeichnet, dass** der Einzelvergleich ausgelöst durch eine Benutzereingabe, insbesondere dem Initiieren des Speicherns der zweiten Daten, erfolgt.

6. Verfahren nach einem der vorhergehenden Ansprüche, **dadurch gekennzeichnet, dass** der Umfang des Teils der in logischer Beziehung zueinander stehender Daten auf Grundlage einer Benutzereingabe gebildet wird.

7. Verfahren nach einem der vorhergehenden Ansprüche, **dadurch gekennzeichnet, dass** es sich um eine relationelle Datenbank handelt.

## Claims

1. A method for operating databanks (DB) with a plurality of first data, **characterized in that**
a) a temporary copy is prepared (S1) for an editing procedure of at least a part of parts of the plurality of first data as second data, which parts have a logical relationship with each other,
b) the second data is offered by a user in such a manner that he can edit the second data (S2),
c) upon the conclusion of the editing procedure an individual comparison of the second data with the first data takes place in such a manner that
c1) upon a coincidence of a second datum of the second data with a first datum of the first data in the databank a reference is made to the first datum corresponding to the second datum,
c2) at least parts of the second data for which no coincidence with first data is determined are stored in the databank, wherein the storage takes place as a function of a piece of information associated with at least a part of the first data and characterizing the data, and the characterizing information is designed as an attribute in such a manner that that it indicates a significance of the particular datum which significance can be set as a value.

2. The method according to the previous claim, **characterized in that**
a) in the case that the individual comparison of a first datum with a low significance value and of the first data to a second datum takes place and no coincidence is present, a user query is carried out in such a manner that the storage takes place as a function of an input of the user following an input of the query,
b) in the case that the individual comparison datum of the first data, which datum has a high significance value, takes place, a storage in the databank of a user query does not take place.

3. The method according to one of the previous claims, that the storage takes place in such a manner that the particular first data in a memory associated with the databank is overwritten by the second datum.

4. The method according to one of the previous claims, that the memory takes place in such a manner that the particular second datum is written as a new first datum in a memory associated with the databank.

5. The method according to one of the previous claims, **characterized in that** the individual comparison takes place initiated by a user input, in particular the initializing of the storage of the second data.

6. The method according to one of the previous claims, **characterized in that** the scope of the part of the data standing in a logical relationship to each other is formed on the basis of a user input.

7. The method according to one of the previous claims, **characterized in that** a relational databank is concerned.

## Revendications

1. Procédé de fonctionnement de bases de données (DB) avec une pluralité de premières données, **caractérisé en ce que**
a) pour une opération d'édition d'au moins une partie de parties, étant en relation logique entre elles, de la pluralité de premières données, une copie temporaire est créée en tant que secondes données (S1),
b) les secondes données sont présentées par un utilisateur de manière qu'il peut éditer les secondes données (S2),
c) à la fin de l'opération d'édition, une comparaison individuelle des secondes données avec les premières données est effectuée de manière que
c1) en cas de concordance d'une seconde donnée des secondes données avec une première donnée des premières données, est déposé dans la base de données un renvoi à la première donnée correspondant à la seconde donnée,
c2) au moins des parties des secondes données, pour lesquelles aucune concordance n'a été déterminée avec des premières données, sont mémorisées dans la base de données, dans lequel la mémorisation est effectuée en fonction d'au moins une information caractérisant les données associées à au moins une partie des premières données, de même l'information caractérisante est conçue en tant qu'attribut de manière qu'il indique une signification, définissable en tant que valeur, de la donnée concernée.

2. Procédé selon la revendication précédente, **caractérisé en ce que**
a) dans le cas que la comparaison individuelle d'une donnée, présentant une valeur significative basse, des premières données est effectuée avec une seconde donnée et qu'aucune concordance n'est présente, une interrogation d'utilisateur est effectuée de manière que la mémorisation est effectuée en fonction d'une entrée de l'utilisateur suivant l'entrée de l'interrogation,
b) dans le cas que la comparaison individuelle de la première donnée présentant une valeur significative haute, des premières données est effectuée avec la seconde donnée, une mémorisation dans la base de données arrête une interrogation d'utilisateur.

3. Procédé selon l'une quelconque des revendications précédentes, **caractérisé en ce que** la mémorisation est effectuée de manière que chaque première donnée dans une mémoire associée à la base de données est écrasée par la seconde donnée.

4. Procédé selon l'une quelconque des revendications précédentes, **caractérisé en ce que** la mémorisation est effectuée de manière que chaque seconde donnée est écrite en tant que nouvelle première donnée dans une mémoire associée de la base de données.

5. Procédé selon l'une quelconque des revendications précédentes, **caractérisé en ce que** la comparaison individuelle est effectuée en étant déclenchée par une entrée d'utilisateur, en particulier par le déclenchement de la mémorisation des secondes données.

6. Procédé selon l'une quelconque des revendications précédentes, **caractérisé en ce que** le volume de la partie des données étant en relation logique les unes avec les autres est formé sur la base d'une entrée d'utilisateur.

7. Procédé selon l'une quelconque des revendications précédentes, **caractérisé en ce qu'**il s'agit d'une base de données relationnelle.
